# EUROPÄISCHE PATENTSCHRIFT

(11) **EP 0 420 949 B1**
(45) Veröffentlichungstag und Bekanntmachung des Hinweises auf die Patenterteilung: **12.01.1994**
(21) Anmeldenummer: 90903168.4
(22) Anmeldetag: 17.02.1990
(51) Int. Cl.: B60T 8/32, F16L 55/033

(54) **SCHLUPFGEREGELTE BREMSANLAGE, INSBESONDERE FÜR KRAFTFAHRZEUGE**
SKID-CONTROLLED BRAKE INSTALLATION, IN PARTICULAR ONE FOR MOTOR VEHICLES
DISPOSITIF DE FREINAGE A REGULATION DU GLISSEMENT, NOTAMMENT POUR VEHICULES A MOTEUR

(30) Priorität: 22.04.1989 DE 3913352; 06.05.1989 DE 3914953
(43) Veröffentlichungstag der Anmeldung: 10.04.1991
(73) Patentinhaber: ITT Automotive Europe GmbH, 60488 Frankfurt (DE)
(72) Erfinder: BEILFUSS, Hans-Jürgen, D-6238 Hofheim (DE); GÖHRING, Frank, D-6000 Frankfurt/Main 90 (DE); VOGT, Michael, D-6000 Frankfurt/Main 90 (DE)
(86) Internationale Anmeldenummer: EP9000266
(87) Internationale Veröffentlichungsnummer: WO9012713

(56) Entgegenhaltungen:
- DE-A- 2 643 860
- DE-A- 3 301 332
- DE-A- 3 700 282
- DE-A-19 240 47
- GB-A- 2 163 503
- GB-A- 2 213 222
- GB-A-21 967 09
- US-A- 3 331 398

## Beschreibung

Die Erfindung betrifft eine Bremsanlage mit Schlupfregelung nach dem Oberbegriff des Anspruchs 1.

Derartige, schlupfgeregelte Bremsanlagen für Kraftfahrzeuge sind bereits hinreichend beschrieben und somit bekannt. Die DE OS 35 05 410 offenbart bereits eine schlupfgeregelte Bremsanlage, die als Bremsdruckgeber einen Hauptzylinder mit vorgeschaltetem, hydraulischen Bremskraftverstärker aufweist. Das Hilfsdruckversorgungssystem enthält eine Hydraulikpumpe, die bei schlupfgeregeltem Bremsvorgang nach Passieren von in Reihe in den Druckmittelkreis geschalteten Rückschlagventilen ein fußkraftproportionaler Hilfsdruck in die Radbremsen nach Öffnen der elektromagnetisch mittels Steuerelektronik erregbaren Einlaßventilen einleitet. Dieser durch die dynamische Pumpenfrequenz und die Schaltfrequenz modulierte Druck wird über das Fluid und über das schwingungsfähige Leitungssystem auf den Hauptzylinder übertragen, so daß insbesondere in Abhängigkeit von der Schaltfrequenz der Ein- und Auslaßventile alle dem Bremsensystem zugeordneten, massebehafteten Teile, die folglich ein Schwingungsgebilde darstellen, unter Berücksichtigung der spezifischen Eigenschwingzahl zum Aufbau von Resonanzschwingungen neigen. Abgesehen von der hierdurch unter Betracht zu ziehenden zusätzlichen mechanischen Beanspruchung des Bremsensystems infolge von Druckimpulsen unterschiedlicher Intensität ist ein vereinzelt als störend empfundener Geräuschpegel für das bekannte Bremsensystem als nachteilig zu bewerten.

Aus der DE 26 43 860 A1 ist bereits eine schlupfgeregelte Bremsanlage mit den Merkmalen gemäß dem Oberbegriff des beanspruchten Erfindungsgegenstandes bekannt, die den Druckschwingungserzeugern wie Pumpe und Steuerventil nachgeschaltet, eine zusätzliche metallische und drucksteife Dämpferkammer aufweist. Damit sollen die von der Pumpe oder den Steuerventilen durch Schwingungserscheinungen hervorgerufenen Geräusche gedämpft werden. Da jedoch die Dämpferkammer metallisch und folglich auch relativ drucksteif ausgebildet ist, können Druckwellen mit unterschiedlicher Intensität nur teilweise und damit in einem engen Frequenzbereich durch entsprechende geometrische Abstimmung der Dämpferkammer an das zu erwartende Schallfeld der Druckschwingungserzeuger angepaßt werden. Überdies ist in diesem Zusammenhang die relativ hohe Schallausbreitungsgeschwindigkeit und die Gefahr bezüglich auftretender Resonanzschwingungen bei Verwendung metallischer Druckkammern als nachteilig anzusehen. Als erheblicher Nachteil erweist sich die fehlende Geräuschentkopplung des üblicherweise über eine Rohrleitung an dem Einlaßventil angeschlossene Tandemhauptzylinder. Da im besonderen das subjektive Geräuschempfinden in der Fahrgastzelle des Kraftfahrzeuges erheblich durch die Schallübertragung der Bremsdruckregelgeräusche auf den Tandemhauptzylinder bestimmt ist, muß die vorbeschriebene Bremsanlage als verbesserungswürdig angesehen werden.

Das Dokument US-A-3,331,398 beschreibt eine spezielle Ausführungsform zur Gestaltung eines Druckpulsationsdämpfers mit definierten Verformungseigenschaften. Dieser weist mehrere in einem starren Gehäuse elastisch verformbare und als Kugels ausgebildete Energiespeicherelemente auf, die in einem hydraulischen Abzweig einer Druckmittelleitung angeordnet sind. Bei Bedarf kann das Gehäuse von der Leitungsverbindung abgeschraubt werden und entsprechend der Gehäusegröße um weitere elastomere Energiespeicherelemente ergänzt werden, die in Reiheschaltung im Gehäuse angeordnet sind. Auftretende Druckpulsationen werden sodann in Verformungsenergie umgewandelt. Durch die vorbeschriebene Anordnung lassen sich die unmittelbar am Leitungsanschluß vorhandenenen Druckpulsationen dämpfen. Eine Anordnung zur unmittelbaren Pulsationsdämpfung an der ursächlichen Geräuschquelle geht jedoch nicht hervor, so daß die beschriebene Anordnung nur eingeschränkt geräuschmindernd wirksam werden kann.

Der Erfindung liegt daher die Aufgabe zugrunde, eine schlupfgeregelte, hydraulische Bremsanlage derart zu verbessern, daß die zuvor beschriebene, durch instationäre Strömungsvorgänge akustisch vernehmbare Druckpulsation verringert wird, wobei gleichzeitig unter Wahrung des nahezu konventionellen Geräteaufbaus eine kostenminimierte Modifikation der Bremsanlage möglich ist.

Die Aufgabe wird erfindungsgemäß durch die den Patentanspruch 1 kennzeichnenden Merkmale gelöst.

Hierdurch ist eine schlupfgeregelte Bremsanlage geschaffen, die sich durch vergleichsweise einfache Integration von elastomeren Druckpulsationsdämpfer zwischen den Ventilmitteln und dem Hauptzylinder des Hydrauliksystems auszeichnet.

Die vorteilhafte Weiterbildung des Erfindungsgegenstandes sieht vor, das Energiespeicherelement aus heterogenen Werkstoffen herzustellen, so daß durch die Kombination verschiedener Werkstoffeigenschaften der Verformungsgrad abhängig von der hydraulischen Druckbeaufschlagung festgelegt werden kann. Hierdurch läßt sich beispielsweise ein degressiver Druckanstieg verwirklichen, so daß die Volumenaufnahme des Hydraulikkreises während der ungeregelten Normalbremsung möglichst gering bleibt.

Durch die Verwendung von Naturkautschuk als Rohstoff zur Herstellung und Veredelung eines kunststoffartigen, elastomeren Gefügekerns läßt sich auf einfache, billige Weise die gewünschte Eigenschaft des Energiespeicherelementes verwirklichen, wobei durch Umschließen des Gefügekerns mittels einer faserverstärkten Hülle eine ausreichende Steifigkeit im Gesamtverbund des Körpers gewährleistet ist.

Weitere Merkmale, Vorteile und Anwendungsmöglichkeiten der Erfindung gehen aus den Unteransprüchen und aus der folgenden Beschreibung mehrerer Ausführungsbeispiele hervor, die in vereinfachter Darstellung die hydraulische Schaltlogistik und ein konstruktionsgerechtes Ausführungsbeispiel zur Integration von Druckpulsationsdämpfern in der Bremsanlage zeigen.

Es zeigen:
- Fig.1: Den Hydraulikkreis der Schlupfgeregelten Bremsanlage mit den am Hauptzylinder unmittelbar angeschlossenenen Druckpulsationsdämpfern.
- Fig.2: Die Schematische Anordnung des erfindungsgemäßen Energiespeicherelementes im Hydraulikkreis zwischen den Hilfsdruckpumpen und der Ventileinrichtung.
- Fig.3: Die konstruktive Integration von Energiespeicherelementen in einem an der Hilfsdruckversorgung angeschlossenen Ventilblock.

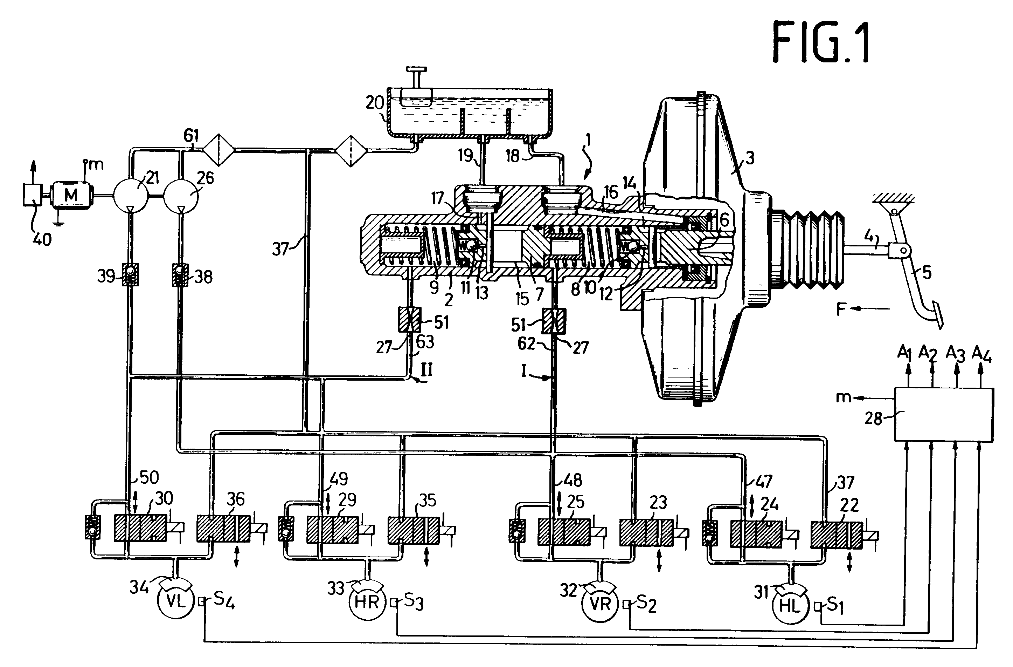

In dem, in Fig. 1 dargestellten Ausführungsbeispiel besteht die erfindungsgemäße Bremsanlage im wesentlichen aus einem Tandemhauptzylinder 2 und einem vorgeschalteten Unterdruckverstärker 3, dem hydraulischen Aggregat, bzw. dem Bremsdruckgeber 1. Über eine Druckstange 4 wird in bekannter Weise die auf ein Bremspedal 5 ausgeübte Pedalkraft F auf den Unterdruckverstärker 3 und von diesem hilfskraftunterstützt auf die Arbeitskolben 6 und 7 des Tandemhauptzylinders 2 übertragen.

In der gezeigten Lösestellung der Bremse sind die Druckkammern 8, 9 des Hauptzylinders 2 über offene Zentralregelventile 10, 11, über Anschlußkanäle 12, 13 im Inneren der Kolben 6, 7 sowie schließlich über Ringkammern 14, 15, über Anschlußbohrungen 16, 17 und über hydraulische Leitungen 18, 19 mit einem Druckausgleichs- und Druckmittelvorratsbehälter 20 verbunden.

Die beiden Bremskreise I und II sind über die erfindungsgemäße, elastomere Druckmittelverbindung 27, die aus zwei, und damit zu jedem Bremskreis I,II angeordneten Hochdruckschläuchen mit darin integrierten Blendenkörpern 51 besteht und den elektromagnetisch betätigbaren, in der Grundstellung auf Durchlaß geschalteten Einlaßventile 24, 25 bzw. 29, 30 mit den Radbremsen 31, 32, 33, 34 verbunden. Die parallel geschalteten Radbremsen 31, 32, bzw. 33, 34 sind den Diagonalen zugeordnet.

Die Radbremsen 31, 32 33, 34 sind an elektromagnetisch betätigbare, in der Grundstellung gesperrte Auslaßventile 22, 23, bzw. 35, 36 angeschlossen, die über eine hydraulische Rückflußleitung 37 einerseits mit dem Druckausgleichsbehälter 20 und andererseits über die Saugleitung 61 mit den Saugseiten der mittels einem Antriebsmotor "M" versehenen Pumpen 22, 26 in Verbindung stehen. Die elektrischen Masseanschlüsse "m" sind ebenfalls symbolisch angedeutet. Außerdem ist eine Überwachungsschaltung 40 vorgesehen, mit der die Arbeitsweise des Motors "M" überprüfbar ist. Die Fahrzeugräder sind mit induktiven Sensoren S1 bis S4 ausgerüstet, die mit einer synchron zur Radumdrehung mitlaufenden Zahnscheibe zusammenwirken und elektrische Signale erzeugen, die das Raddrehverhalten, d.h. die Radgeschwindigkeitenänderung erkennen lassen. Diese Signale werden über die Eingänge S1 bis S4 einer Steuerelektronik 28 zugeführt, die Bremsdrucksteuersignale erzeugt, mit denen beim Erkennen einer Blockiertendenz die Einlaß- und Auslaßventile 22, 23, 24, 25 Sowie 29, 30, 35, 36 zeitweise umschaltet und dadurch der Bremsdruck konstant gehalten, abgebaut und zur gegebenen Zeit wieder geöffnet wird. Über die Ausgänge A1 bis A4 werden hierdurch die Betätigungsmagnete der Einlaß- und Auslaßventile angesteuert, die elektrischen Verbindungsleitungen zwischen den Anschlüssen A1 bis A4 und den nicht näher abgebildeten Wicklungen der Ventile 22, 23, 24, 25 sowie 29, 30, 35, 36 hergestellt.

Das Einschaltsignal zum Inbetriebsetzen des Antriebsmotors "M" der Hydraulikpumpe 20, 26, der während einer Schlupfregelung laufen muß, wird über den Anschluß "m" an dem Motor "M" angelegt.

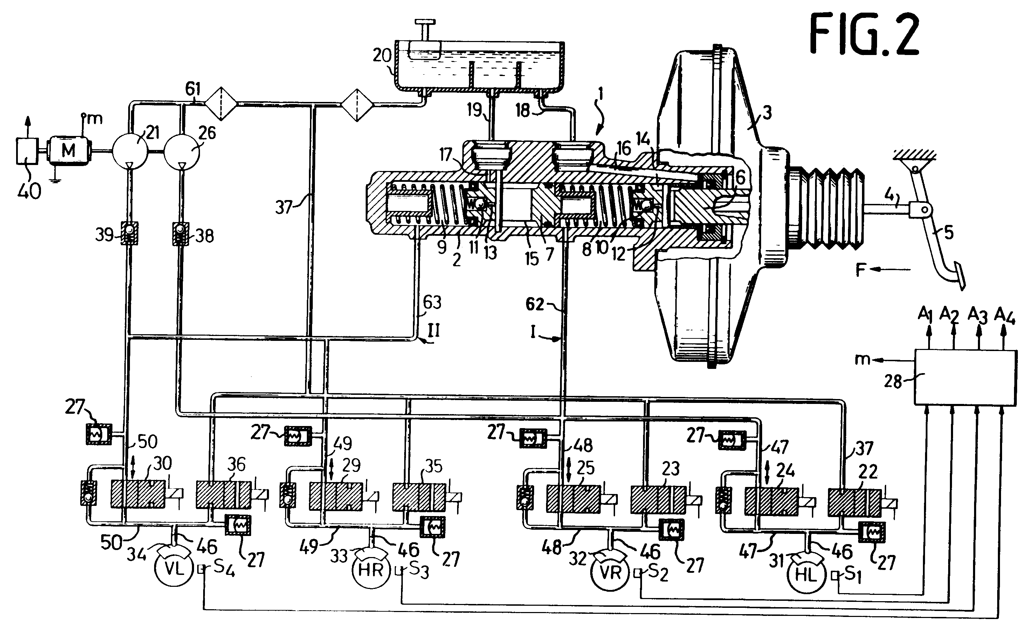

Fig. 2 zeigt schematisch eine zu Fig. 1 identische hydraulische Schaltung, so daß analog zu Fig. 1 die beiden Bremskreise I und II des Hauptzylinders 2 über elektromagnetisch betätigbare, in der Grundstellung auf Durchlaß geschaltete Einlaßventile 24, 25 bzw. 29, 30 mit den Radbremsen 31, 32, 33, 34 verbunden sind, wobei die erfindungsgemäßen, Schwingungsdämpfenden, elastomeren Energiespeicherelemente 27 abweichend von Fig. 1 jeweils in unmittelbarer Nähe der druckseitig hydraulisch beaufschlagten Einlaß- und Anslaßventile 24, 25, 29, 30, 22, 23, 35, 36 im Nebenschluß der Zweigleitungen 47, 48, 49, 50 plaziert sind.

### Funktionsweise der Bremsanlage gemäß Fig. 1

Bei Bremsbetätigung wird die Pedalkraft F unterstützt durch den Unterdruck im Verstärker 3 auf die Hauptzylinderkolben 6, 7 übertragen. Die Zentralregelventile 10, 11 schließen, so daß sich nunmehr in den Druckkammern 8, 9 und damit in den Bremskreisen I und II Bremsdruck aufbauen kann, der über jeweils einem in einer elastomeren Druckmittelverbindung 27 zugeordneten Blendenkörper 51 zu den Ventilen 24, 25, bzw. 29, 30 und zu den Radbremsen 31, 33 bzw. 33, 34 gelangt.

Wird nun mit Hilfe der Sensoren S1 bs S4 und der Schaltung 28 eine Blockiertendenz an einem oder mehreren Rädern erkannt, setzt die Schlupfregelung ein: Der Antriebsmotor "M" der Pumpe 21, 26 schaltet sich ein, wobei sich in den beiden Einströmleitungen ein dynamisch pulsierender Druck aufbaut, der proportional der Pumpendrehfrequenz als Erregerfrequenz über die Rückschlagvenile 38, 39 und Zweigleitungen 47, 48 bzw. 49, 50 auf die Einlaßventile 24, 25 bzw. 29, 30 und auf die Druckkammern 8, 9 des Hauptzylinders 2 einwirkt. Durch das Einfügen einer als kurzes Hochdruck-Schlauchstück ausgebildeten, elastomeren Druckmittelverbindung in den Hauptbremsleitungen 62,63 nahe dem Hauptzylinder 2, erfährt die pulsierende und damit instationäre Druckquelle infolge der Volumendehnung des elastomeren Schlauchstückes zunächst eine dämpfende Wirkung, die zur Verkleinerung der Amplitude führt, wobei unter Abstimmung des Blendenkörpers 51 auf die der Pumpendrehfrequenz proportionale Erregerfrequenz im Schwingkreis eine instationäre, phasenverschobene Trägerwelle bei der Umsetzung der Druckenergie in kinetische Energie verbleibt. Die folglich geänderte Schallausbreitungsgeschwindigkeit verhindert das Auftreten von Interferenzen, so daß die Summe der Amplituden der Einzelwellen tendenziell klein bleibt. Zumindest hat die Abstimmung der elastomeren Druckmittelverbindung mit dem Blendenkörper derart zu erfolgen, daß dem höhrempfindlichen Frequenzbereich von 16 bis 20.000 Hz ein möglichst niedriger Schalldruckpegel zugrunde gelegt werden kann.

Ein Signal der Steuerelektronik 28 führt zur Umschaltung der elektromagnetisch betätigbaren Einlaßventile 24, 25 sowie 29, 30 und damit zum Absperren der Bremskreise I und II bzw. der Zweigleitungen 47 bis 50, wodurch zusätzlich Störfrequenzen abhängig von der Fortpflanzungsgeschwindigkeit der Druckwellen zur Geräuschbildung beitragen können. Die weitere Verschiebung der Hauptzylinderkolben 6, 7 in Richtung der Pedalkraft F, sowie eine Entleerung der Druckkammern 8, 9 wird verhindert, da nunmehr das Druckmittel von den Pumpen 21, 26 über die Versorgungsleitung die geöffneten Rückschlagventile 38, 39 und die Hauptbremsleitungen 62, 63 in die Druckkammern 8, 9 impulsartig einzuströmen Versucht, um die Kolben 6, 7 in ihre Ausgangsstellung zurückzudrücken. Durch die Anordnung der elastomeren Druckmittelverbindung 27 und der Blendenkörper 51 erfolgt jedoch eine druckwellendämpfende Wirkung, so daß gleichzeitig die Geräusche gemindert werden. Der Bremsdruckverlauf in den Radbremsen 31 bis 34 wird durch die Einlaß- und Auslaßventile 24, 25, 29, 30 bzw. 22, 23, 35, 36 festgelegt, denen über die Leitungen A1 bis A4 weitere Schlupfgeregelte Bremsdrucksteuersignale zugeführt werden.

Wie aus der Zeichnung ersichtlich ist, sind die Einlaßventile 24, 25 bzw. 29, 30 noch durch parallel geschaltete Rückschlagventile abgesichert. Diese Rückschlagventile ermöglichen in besonderen Fällen eine Beendigung der Bremsdruckregelung bzw. ein Lösen der Radbremsen, da bei noch geschlossenen Einlaßventilen 24, 25 bzw. 29, 30 und Auslaßventilen 21, 23 bzw. 35, 36 eine geringe Menge Druckmittel aus den Radbremsen 31 bis 34 in die Druckkammern 8, 9 zurückströmen kann, wenn die Kolben 6, 7 des Hauptzylinders 2 in die Ausgangsstellung zurückgeschoben sind und sich die Zentralregelventile 10, 11 in der Offenstellung befinden.

### Funktionsweise der Bremsanlage gemäß Fig. 2

Wie bereits aus der Funktionsbeschreibung von Fig. 1 bekannt ist, wird bei Bremsbetätigung die Pedalkraft F unterstützt durch den Unterdruck im Verstärker 3 auf die Hauptzylinderkolben 6, 7 übertragen. Die Zentralregelventile 10, 11 schließen, so daß sich nunmehr in den Druckkammern 8, 9 und damit in den Bremskreisen I und II Bremsdruck aufbauen kann, der über die Ventile 24, 25 bzw. 29, 30 zu den Radbremsen 31, 32 bzw. 33, 34 gelangt.

Wird eine Blockiertendenz an einem oder an mehreren Rädern erkannt, setzt auf bekannte Weise die Schlupfregelung ein. Der Antriebsmotor M der Pumpen 21, 26 wird aktiviert, wobei sich in den beiden Einströmleitungen ein dynamischer, jedoch pulsierender Druck aufbaut, der über die Rückschlagventile 38, 39 und die Zweigleitungen 47, 48 bzw. 49, 50 auf die Einlaßventile 25, 26 bzw. 29, 30 einwirkt. Durch das Einfügen von Energiespeicherelementen 27 in die Zweigleitungen 47, 48 bzw. 49, 50 erfährt die pulsierende und damit instationäre Druckwelle infolge der Volumendehnung eine dämpfende Wirkung.

Das Umschalten der Einlaßventile 24, 25 bzw. 29, 30 und der Auslaßventile 22, 23 bzw. 35, 36 führt gleichfalls zu stark pulsierenden Druckschwankungen in den Druckmittelleitungen, so daß die darin eingefügten schwingungsdämpfenden, elastomeren Energiespeicherelemente 27 in unmittelbarer Nähe der druckbeaufschlagten Ventile eine druckabhängige Verformung erfahren, die gleichzeitig zu einer druckwellendämpfenden, geringfügigen Volumenerweiterung des Hydrauliksystems führt. Als Energiespeicherelement 27 eignet sich vorzugsweise ein elliptisch geformter Körper, dessen Gefügekern 42 eine große Elastizität aufweist, wobei die den Gefügekern 42 umschließende Hülle 43 aus einem Material großer Dichte und Steifigkeit mit elastischen Verformungseigenschaften aufweist, so daß durch die Abstimmung des Gefügekerns 42 und der Hülle 43 ein Energiespeicherelement 27 definierter Verformung herstellbar ist, so daß beispielsweise dem instationären Druckverlauf eine degressive Kennliniencharakteristik aufgeprägt werden kann. Hierdurch ist bei niedrigen Bremsdrücken und damit geringem Geräuschpegel eine Verformung des Energiespeicherelementes 27 zunächst ausgeschlossen, wodurch auf vorteilhafte Weise eine zusätzliche Volumenaufnahme des Hydrauliksystemes vermieden ist. Erst bei hohen Drücken erfolgt eine gewünschte, definierte Verformung des Energiespeicherelementes 27 zum Zwecke der Geräuschdämpfung. Eine nachteilige Auswirkung des variablen Volumenzuwachses bei hohen Drücken ist hierbei als vernachlässigbar klein einzustufen.

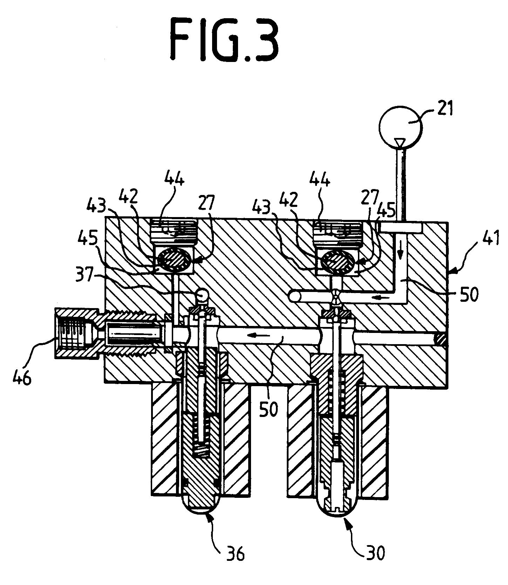

Fig. 3 zeigt die konstruktive Anordnung zweier elastomerer Energiespeicherelemente 27 in den an den Pumpen 21, 26 angeschlossenen Abzweigleitungen 47 bis 50, wobei in der dargestellten Schnittzeichnung von den zu einem Ventilblock 41 zusammengefaßten Einlaß- und Auslaßventilen 22 bis 25, 29, 30, 35, 36 exemplarisch nur das aus der Abbildung 2 bekannte Einlaßventil 30 und Auslaßventil 36 zu sehen ist. Angrenzend an die dargestellte Zweigleitung 50 befinden sich jeweils druckseitig dem Einlaßventil 30 und dem Auslaßventil 36 zugeordnet die erfindungsgemäßen Energiespeicherelemente 27. Die Energiespeicherelemente 27 sind in der bevorzugten Ausführungsform als Kugelkörper geformt, wobei der weiche Gefügekern 42 von einer Hülle 43 hoher Werkstoffdichte und Steifigkeit umgeben ist, so daß bei Druckbeaufschlagung der Zweigleitungen 50 abhängig von der Aktivierung des Einlaßventiles 30 oder des Auslaßventiles 36 das jeweils hydraulisch in einer mittels Verschraubung 44 verschlossenen Kammer 45 angeordnete Energiespeicherelement 27 druckbeaufschlagt eine definierte Verformung und Volumenaufnahme des Hydrauliksystems gewährleistet, bevor beispielsweise ein Rückströmen über die Rückflußleitung 37 zum Vorratsbehälter 20 oder Zuströmen zum abgebildeten Radanschluß 46 erfolgt.

Die Abstimmung der vor den Auslaßventilen angeordneten Dämpferelemente kann auch derart erfolgen, daß eine Linearisierung der Druckauf- und abbaugradienten über einen großen Druckbereich bewirkt wird. Bei Fahrzeugen mit hohem Blockierdruckniveau (> 100 bar) bleibt der hydraulische Druck dadurch über einen weiten Druckbereich während des Druckanstieges und - abfalls pro Ventilpuls konstant.

### Bezugszeichenliste:

- 1: Bremsdruckgeber
- 2: Hauptzylinder
- 3: Unterdruckverstärker
- 4: Druckstange
- 5: Bremspedal
- 6: Arbeitskolben
- 7: Arbeitskolben
- 8: Druckkammer
- 9: Druckkammer
- 10: Zentralregelventil
- 11: Zentralregelventil
- 12: Anschlußkanal
- 13: Anschlußkanal
- 14: Ringkammer
- 15: Ringkammer
- 16: Anschlußbohrung
- 17: AnSchlußbohrung
- 18: Hydraulische Leitung
- 19: Hydraulische Leitung
- 20: Druckausgleichs- und Druckmittelvorratsbehälter
- 21: Hydraulikpumpe
- 22: Auslaßventil
- 23: Auslaßventil
- 24: Einlaßventil
- 25: Einlaßventil
- 26: Hydraulikpumpe
- 27: Druckpulsationsdämpfer (elastomere Druckmittelverbindung, Energiespeicherelement)
- 28: Steuerelektronik
- 29: Einlaßventil
- 30: Einlaßventil
- 31: Radbremse
- 32: Radbremse
- 33: Radbremse
- 34: Radbremse
- 35: Auslaßventil
- 36: Auslaßventil
- 37: Rückflußleitung
- 38: Rückschlagventil
- 39: Rückschlagventil
- 40: Überwachungsschaltung
- 41: Ventilblock
- 42: Gefügekern
- 43: Hülle
- 44: Verschraubung
- 45: Kammern
- 46: Radanschlüsse
- 47: Zweigleitung
- 48: Zweigleitung
- 49: Zweigleitung
- 50: Zweigleitung
- 51: Blendenkörper
- 61: Saugleitung
- 62: Hauptbremsleitung
- 63: Hauptbremsleitung
- M: Antriebsmotor
- m: Masseanschluß
- F: Pedalkraft
- S1: Signaleingang
- S2: Signaleingang
- S3: Signaleingang
- S4: Signaleingang
- A1: Signalausgang
- A2: Signalausgang
- A3: Signalausgang
- A4: Signalausgang

## Patentansprüche

1. Schlupfgeregelte Bremsanlage, insbesondere für Kraftfahrzeuge, mit einem pedalbetätigten, hilfskraftunterstützten Bremsdruckgeber (1), der einen Hauptzylinder (2) aufnimmt, an den über Hauptbremsleitungen (62, 63) die Radbremsen angeschlossen sind, aus hydraulischen Hilfsdruckpumpen (21, 26) sowie aus Radsensoren (S1, S2, S3, S4) und elektronischen Schaltkreisen zur Ermittlung des Raddrehverhaltens und zur Erzeugung von elektrischen Bremsdrucksteuersignalen bestehend, mit denen zur Schlupfregelung in die Druckmittelleitungen eingefügte, elektromagnetisch betätigbare Druckmitteleinlaßventile und -auslaßventile (24, 25, 29, 30 bzw. 22, 23, 35, 36) steuerbar sind, wobei in den Druckmittelleitungen zwischen dem Hauptzylinder (2) und den Einlaß- bzw. Auslaßventilen (24,25,29,30 bzw. 22,23,35,36) Druckpulsationsdämpfer (27) mit definierten Verformungseigenschaften und/oder definierter Durchströmungslänge angeordnet sind, dadurch **gekennzeichnet**, daß zwischen den, den Hauptzylinder (2) und den hydraulischen Hilfsdruckpumpen (21,26) verbindenden Hauptbremsleitungen (62, 63) in unmittelbarer Nähe des Hauptzylinders (2) schwingungsdämpfende, elastomere Druckmittelverbindungen (27) als Druckpulsationsdämpfer mit definierter Volumenerweiterung und Durchströmungslänge vorgesehen sind und daß die elastomeren, schwingungsdämpfenden Druckmittelverbindungen (27) Blendenkörper (51) aufnehmen, so daß eine Druckwelle bestimmter Erregerfrequenz in den elastomeren Druckmittelverbindungen (27) eine Dämpfung erfährt.

2. Schlupfgeregelte Bremsanlage nach Anspruch 1, dadurch **gekennzeichnet,** daß die Volumenerweiterung der elastomeren Druckmittelverbindung (27) 3 mm³ pro Bar Druckeinheit nicht überschreitet.

3. Schlupfgeregelte Bremsanlage nach einem der vorhergehenden Ansprüche, dadurch **gekennzeichnet,** daß das Speichervolumen der elastomeren Druckmittelverbindung (27) 1 cm³pro Meter Schlauchlänge nicht überschreitet.

4. Schlupfgeregelte Bremsanlage nach einem der vorhergehenden Ansprüche, dadurch **gekennzeichnet,** daß die Länge der elastomeren Druckmittelverbindung (27) 1,5 cm nicht überschreitet.

5. Schlupfgeregelte Bremsanlage, insbesondere für Kraftfahrzeuge, mit einem pedalbetätigten, hilfskraftunterstützten Bremsdruckgeber (1), der einen Hauptzylinder (2) aufnimmt, an den über Hauptbremsleitungen (62, 63) die Radbremsen angeschlossen sind, aus hydraulischen Hilfsdruckpumpen (21, 26) sowie aus Radsensoren (S1, S2, S3, S4) und elektronischen Schaltkreisen zur Ermittlung des Raddrehverhaltens und zur Erzeugung von elektrischen Bremsdrucksteuersignalen bestehend, mit denen zur Schlupfregelung in die Druckmittelleitungen eingefügte, elektromagnetisch betätigbare Druckmitteleinlaßventile und -auslaßventile (24, 25, 29, 30 bzw. 22, 23, 35, 36) steuerbar sind, wobei in den Druckmittelleitungen zwischen dem Hauptzylinder (2) und den Einlaß- bzw. Auslaßventilen (24,25,29,30 bzw. 22,23,35,36) Druckpulsationsdämpfer (27) mit definierten Verformungseigenschaften und/oder definierter Durchströmungslänge angeordnet sind, dadurch **gekennzeichnet,** daß als Druckpulsationsdämpfer zwischen den Druckmitteleinlaßventilen (24, 25, 29, 30) bzw. den Druckmittelauslaßventilen (22, 23, 35, 36) und den hydraulischen Hilfsdruckpumpen (21, 26) in unmittelbarer Nähe der druckseitig hydraulisch beaufschlagten Ventile mindestens ein schwingungsdämpfendes, elastomeres Energiespeicherelement (27) mit definierten Verformungseigenschaften zur Beeinflussung der variablen Volumenaufnahme in den Druckmittelleitungen vorgesehen ist.

6. Schlupfgeregelte Bremsanlage nach Anspruch 5, dadurch **gekennzeichnet,** daß die variable Volumenaufnahme des Energiespeicherelementes (27) maximal 2 mm³ pro einem Bar Druck beträgt.

7. Schlupfgeregelte, Bremsanlage nach Anspruch 5 oder 6, dadurch **gekennzeichnet,** daß das Energiespeicherelement (27) vorzugsweise eine elliptische Gestalt aufweist und mit einem heterogenen Gefügekern geringer Gefügedichte und -härte, jedoch hoher Elastizität versehen ist.

8. Schlupfgeregelte Bremsanlage nach Anspruch 7, dadurch **gekennzeichnet,** daß der Gefügekern (42) von einer Hülle (43) umschlossen ist, deren Material Werkstoffeigenschaften großer Dichte und Steifigkeit und mit großem elastischen Verformungsgrad aufweist.

9. Schlupfgeregelte Bremsanlage nach einem der vorhergehenden Ansprüche, dadurch **gekennzeichnet,** daß das Energiespeicherelement (27) Verbundwerkstoffe, vorzugsweise Faserverbundwerkstoffe, beinhaltet.

10. Schlupfgeregelte Bremsanlage nach Anspruch 7, dadurch **gekennzeichnet,** daß der Gefügekern (42) aus nichtmetallischen, organischen Werkstoffen, insbesondere auf Basis von Naturkautschuk hergestellten, elastomeren Kunststoffen besteht.

11. Schlupfgeregelte Bremsanlage nach Anspruch 5, dadurch **gekennzeichnet,** daß das Energiespeicherelement (27) im Nebenschluß der druckbeaufschlagten Zweigleitungen (47, 48, 49, 50) angeordnet ist.

12. Schlupfgeregelte Bremsanlage nach Anspruch 11, dadurch **gekennzeichnet,** daß die Anordnung des Energiespeicherelementes (27) in einer Kammer (45) erfolgt, wobei das lichte Weitenmaß der Kammer (45) dem druckbeaufschlagten Außenmaß des Energiespeicherelementes (27) entspricht.

13. Schlupfgeregelte Bremsanlage nach einem der vorhergehenden Ansprüche, dadurch **gekennzeichnet,** daß der Verformungsgrad des Energiespeicherelementes (27) einen degressiven Druckanstieg, sowie einen progressiven Druckabfall in den Radbremsen (31, 32, 33, 34) bewirkt.

## Claims

1. A slip-controlled brake system, especially for use with automotive vehicles comprising a pedal-actuated auxiliary-force-assisted brake pressure generator (1) accommodating a master cylinder (2) to which, through main brake conduits (62, 63), the wheel brakes are connected, comprising hydraulic auxiliary pressure pumps (21, 26) and wheel sensors (S1, S2, S3, S4) and electronic circuits for determining the wheel rotating pattern and for generating electric brake pressure control signals capable to control electromagnetically operable pressure fluid inlet valves and outlet valves (24, 25, 29, 30 and 22, 23, 35, 36, respectively) interposed in the pressure fluid conduits for the purpose of slip control, with pressure pulsation dampers (27) having defined deformation properties and/or a defined flow length being arranged in the pressure fluid conduits between the master cylinder (2) and the inlet and outlet valves (24, 25, 29, 30 and 22, 23, 35, 36, respectively),
**characterized** in that provided between the main brake conduits (62, 63) connecting the master cylinder (2) to the hydraulic auxiliary pressure pumps (21, 26), in the immediate vicinity of the master cylinder (2), are vibration-attenuating elastomeric pressure fluid connections (27) serving as pressure pulsation dampers of a defined volume expansion and flow length, and in that the elastomeric vibration-attenuating pressure fluid connections (27) accommodate diaphragm bodies (51) so that a pressure wave of a predetermined energizing frequency in the elastomeric pressure fluid connections (27) is subjected to an attenuating effect.

2. A slip-controlled brake system as claimed in claim 1,
**characterized** in that the volume expansion of the elastomeric pressure fluid connection (27) does not exceed 3 mm³ per bar pressure unit.

3. A slip-controlled brake system as claimed in any one of the preceding claims,
**characterized** in that the storage volume of the elastomeric pressure fluid connection (27) does not exceed 1 cm³ per meter tube length.

4. A slip-controlled brake system as claimed in any one of the preceding claims,
**characterized** in that the length of the elastomeric pressure fluid connection (27) does not exceed 1.5 cm.

5. A slip-controlled brake system, especially for use with automotive vehicles comprising a pedal-actuated auxiliary-force-assisted brake pressure generator (1) accommodating a master cylinder (2) to which, through main brake conduits (62, 63), the wheel brakes are connected, comprising hydraulic auxiliary pressure pumps (21, 26) and wheel sensors (S1, S2, S3, S4) and electronic circuits for determining the wheel rotating pattern and for generating electric brake pressure control signals capable to control electromagnetically operable pressure fluid inlet valves and outlet valves (24, 25, 29, 30 and 22, 23, 35, 36, respectively) interposed in the pressure fluid conduits for the purpose of slip control, with pressure pulsation dampers (27) having defined deformation properties and/or a defined flow length being arranged in the pressure fluid conduits between the master cylinder (2) and the inlet and outlet valves (24, 25, 29, 30 and 22, 23, 35, 36, respectively),
**characterized** in that provided between the pressure fluid inlet valves (24, 25, 29, 30) and the pressure fluid outlet valves (22, 23, 35, 36), respectively, and the hydraulic auxiliary pressure pumps (21, 26) in the immediate vicinity of the valves to which pressure is hydraulically applied on the pressure side is at least one vibration-attenuating, elastomeric energy storing element (27) of defined deformation properties, serving as a pressure pulsation damper, to influence the variable volume intake in the pressure fluid conduits.

6. A slip-controlled brake system as claimed in claim 5,
**characterized** in that the variable volume intake of the energy storing element (27) amounts to a maximum of 2 mm³ per bar pressure.

7. A slip-controlled brake system as claimed in claim 5 or 6,
**characterized** in that the energy storing element (27), preferably, is of an elliptical configuration and exhibits a heterogeneous material core of a low material density and hardness, but of a high elasticity.

8. A slip-controlled brake system as claimed in claim 7,
**characterized** in that the material core (42) is enclosed by an envelope (43), the material of which exhibits high-density and high-rigidity properties and is characterized by a high degree of deformation.

9. A slip-controlled brake system as claimed in any one of the preceding claims,
**characterized** in that the energy storing element (27) is composed of compound materials, preferably of fibrous compound materials.

10. A slip-controlled brake system as claimed in claim 7,
**characterized** in that the material core (42) is made of non-metallic organic substances, especially of elastomeric plastics made on the basis of natural rubber.

11. A slip-controlled brake system as claimed in claim 5,
**characterized** in that the energy storing element (27) is arranged in shunt with the pressurized branch conduits (47, 48, 49, 50).

12. A slip-controlled brake system as claimed in claim 11,
**characterized** in that the energy storing element (27) is arranged in a chamber (45), with the inside diameter of the chamber (45) corresponding to the pressurized outside diameter of the energy storing element (27).

13. A slip-controlled brake system as claimed in any one of the preceding claims,
**characterized** in that the degree of deformation of the energy storing element (27) causes a degressive rise in pressure and a progressive decline in pressure in the wheel brakes (31, 32, 33, 34).

## Revendications

1. Système de freinage à régulation du glissement, notamment pour véhicule automobile, comprenant un générateur de pression de freinage (1), qui est actionné au moyen d'une pédale et est assisté par une force auxiliaire et qui comprend un maître-cylindre (2) auquel les freins de roues sont raccordés par des conduites principales de freinage (62, 63), constitué de pompes hydrauliques de pression auxiliaire (21, 26), de capteurs de roues (S1, S2, S3, S4) et de circuits électroniques servant à déterminer le comportement des roues en rotation et à produire des signaux électriques de commande de pression de freinage au moyen desquels peuvent être commandées, en vue de la régulation du glissement, des valves d'entrée d'agent de pression et valves de sortie d'agent de pression (24, 25, 29, 30 et 22, 23, 35, 36) à actionnement électromagnétique et insérées dans les conduites d'agent de pression, tandis que des amortisseurs de pulsations de pression (27) possédant des propriétés déterminées de déformation et/ou des longueurs déterminées de passage d'écoulement sont disposés dans les conduites d'agent de pression entre le maître-cylindre (2) et les valves d'entrée et valves de sortie (24, 25, 29, 30 et 22, 23, 35, 36), caractérisé en ce que des liaisons d'agent de pression (27), présentant des propriétés analogues à celles des élastomères, amortissant les oscillations, servant d'amortisseurs de pulsations de pression et possédant une dilatation volumique déterminée et une longueur déterminée de passage d'écoulement, sont disposés, à proximité directe du maître-cylindre (2), dans les conduites principales de freinage (62, 63) réunissant le maître-cylindre (2) et les pompes hydrauliques de pression auxiliaire (21, 26) et en ce que les liaisons d'agent de pression (27), présentant des propriétés analogues à celles des élastomères, qui amortissent les oscillations, comprennent des corps à diaphragme (51), de sorte qu'une onde de pression ayant une fréquence déterminée d'excitation est soumise à un amortissement dans ces liaisons d'agent de pression (27) présentant des propriétés analogues à celles des élastomères.

2. Système de freinage à régulation du glissement suivant la revendication 1, caractérisé en ce que la dilatation volumique de la liaison d'agent de pression (27) présentant des propriétés analogues à celles des élastomères n'est pas supérieure à 3 mm³ par bar d'unité de pression.

3. Système de freinage à régulation du glissement suivant l'une des revendications précédentes, caractérisé en ce que le volume d'accumulation de la liaison d'agent de pression (27) présentant des propriétés analogues à celles des élastomères n'est pas supérieur à 1 cm³ par mètre de longueur de tuyau souple.

4. Système de freinage à régulation du glissement suivant l'une des revendications précédentes, caractérisé en ce que la longueur de la liaison d'agent de pression (27) présentant des propriétés analogues à celles des élastomères n'est pas supérieure à 1,5 cm.

5. Système de freinage à régulation du glissement, notamment pour véhicule automobile, comprenant un générateur de pression de freinage (1), qui est actionné au moyen d'une pédale et est assisté par une force auxiliaire et qui comprend un maître-cylindre (2) auquel les freins de roues sont raccordés par des conduites principales de freinage (62, 63), constitué de pompes hydrauliques de pression auxiliaire (21, 26), de capteurs de roues (S1, S2, S3, S4) et de circuits électroniques servant à déterminer le comportement des roues en rotation et à produire des signaux électriques de commande de pression de freinage au moyen desquels peuvent être commandées, en vue de la régulation du glissement, des valves d'entrée d'agent de pression et valves de sortie d'agent de pression (24, 25, 29, 30 et 22, 23, 35, 36) à actionnement électromagnétique et insérées dans les conduites d'agent de pression, tandis que des amortisseurs de pulsations de pression (27) possédant des propriétés déterminées de déformation et/ou des longueurs déterminées de passage d'écoulement sont disposés dans les conduites d'agent de pression entre le maître-cylindre (2) et les valves d'entrée et valves de sortie (24, 25, 29, 30 et 22, 23, 35, 36), caractérisé en ce qu'au moins un élément d'accumulation d'énergie (27) présentant des propriétés analogues à celles des élastomères, qui amortit les oscillations et possède des propriétés déterminées de déformation en vue d'influer sur l'augmentation variable de volume pouvant être acceptée dans les conduites d'agent de pression, est disposé, en tant qu'amortisseur de pulsations de pression et au voisinage direct des valves soumises hydrauliquement à une action du côté de la pression, entre les valves d'entrée d'agent de pression (24, 25, 29, 30), et les valves de sortie d'agent de pression (22, 23, 35, 36), et les pompes hydrauliques de pression auxiliaire (21,, 26).

6. Système de freinage à régulation du glissement suivant la revendication 5, caractérisé en ce que l'augmentation variable de volume pouvant être acceptée par l'élément d'accumulation d'énergie (27) est au maximum égale à 2 mm³ par bar de pression.

7. Système de freinage à régulation du glissement suivant l'une des revendications 5 et 6, caractérisé en ce que l'élément d'accumulation d'énergie (27) a de préférence une forme elliptique et est pourvu d'un noyau de structure hétérogène ayant une densité de structure et une dureté assez faibles, mais une élasticité assez élevée.

8. Système de freinage à régulation du glissement suivant la revendication 7, caractérisé en ce que le noyau de structure (42) est entouré d'une enveloppe (43) dont la matière possède, comme propriétés, une densité et une rigidité élevées et un taux de déformation élastique élevé.

9. Système de freinage à régulation du glissement suivant l'une des revendications précédentes, caractérisé en ce que l'élément d'accumulation d'énergie (27) comporte des matières composites, de préférence des matières composites contenant des fibres.

10. Système de freinage à régulation du glissement suivant la revendication 7, caractérisé en ce que le noyau de structure (42) est constitué de matières organiques métalliques, notamment de matières plastiques élastomères à base de caoutchouc naturel.

11. Système de freinage à régulation du glissement suivant la revendication 5, caractérisé en ce que l'élément d'accumulation d'énergie (27) est disposé en dérivation par rapport aux branches de conduite (47, 48, 49, 50) soumises à une pression.

12. Système de freinage à régulation du glissement suivant la revendication 11, caractérisé en ce que l'agencement de l'élément d'accumulation d'énergie (27) est réalisé dans une chambre (45), la dimension de largeur libre de la chambre (45) étant égale à la dimension extérieure de l'élément d'accumulation d'énergie (27) qui est soumise à une pression.

13. Système de freinage à régulation du glissement suivant l'une des revendications précédentes, caractérisé en ce que le taux de déformation de l'élément d'accumulation d'énergie (27) provoque une augmentation de pression, présentant une certaine dégressivité, ainsi qu'une diminution de pression, présentant une certaine progressivité, dans les freins de roues (31 ,32, 33, 34).
